# EUROPÄISCHE PATENTSCHRIFT

(11) **EP 3 678 833 B1**
(45) Veröffentlichungstag und Bekanntmachung des Hinweises auf die Patenterteilung: **22.01.2025**
(21) Anmeldenummer: 18769606.7
(22) Anmeldetag: 03.09.2018
(51) Int. Cl.: B29C 48/694, B29C 48/255, B29C 48/76, B01D 19/00, B29B 13/10

(54) **VERFAHREN UND VORRICHTUNG ZUM REINIGEN EINER POLYMERSCHMELZE**
METHOD AND DEVICE FOR CLEANING A POLYMER MELT
PROCÉDÉ ET DISPOSITIF POUR NETTOYER UNE MASSE FONDUE DE POLYMÈRE

(30) Priorität: 05.09.2017 DE 102017008320
(43) Veröffentlichungstag der Anmeldung: 15.07.2020
(73) Patentinhaber: BB Engineering GmbH, 42897 Remscheid (DE)
(72) Erfinder: SCHÄFER, Klaus, 42897 Remscheid (DE); ALEXANDER, Jörg, 42897 Remscheid (DE); DICKMEISS, Friedel, 40764 Langenfeld (DE); SCHMITZ, Matthias, 50823 Köln (DE)
(74) Vertreter: Neumann, Ditmar
(86) Internationale Anmeldenummer: PCT/EP2018/073561
(87) Internationale Veröffentlichungsnummer: WO 2019/048364

(56) Entgegenhaltungen:
- EP-A1- 0 705 677
- EP-A1- 2 008 784
- EP-A1- 2 439 044
- WO-A1-2005/087477
- AT-A1- 511 574
- CN-A- 107 053 635
- DD-A1- 231 029

## Beschreibung

Die Erfindung betrifft ein Verfahren zum Reinigen einer Polymerschmelze gemäß dem Oberbegriff des Anspruchs 1 sowie eine Vorrichtung zum Reinigen einer Polymerschmelze gemäß dem Oberbegriff des Anspruchs 10.

Bei der Verarbeitung von thermoplastischen Kunststoffen ist es allgemein bekannt, dass bei einem Extrusionsprozess beispielsweise zur Herstellung von strangförmigen Produkten die Polymerschmelze von Fremdstoffen weitgehend gereinigt werden muss. So weisen einige Thermoplaste gewisse Anteile von Monomeren, Oligomeren, Lösungsmitteln und andere flüchtige Bestandteile als Rückstände des Herstellungsverfahrens auf. Andere Polymere wie beispielsweise Polyamid sind sehr hykroskopisch, so dass sie stark zur Feuchtigkeitsaufnahme neigen. Die aufgenommene Feuchtigkeit kann im Innern des Polymers eingeschlossen oder absorbiert sein. Zudem werden beim Aufschmelzen granulatförmige Polymere hohe Anteile von Luft in die Schmelze eingebunden. Diese Bestandteile werden hier als flüchtige Fremdstoffe bezeichnet.

Neben den flüchtigen Fremdstoffen treten jedoch auch Verschmutzungen der Polymerschmelze auf, die hier als feste Fremdstoffe bezeichnet werden. Derartige feste Fremdstoffe sind Verunreinigungen, die beispielsweise im Granulat enthalten sind oder als Abrieb von Maschinenteilen stammen. Darüberhinaus treten jedoch auch Zersetzungsprodukte innerhalb der Schmelze auf, die beispielsweise bei einer Faserherstellung zu ungewünschten Fadenbrüchen führen können.

Im Stand der Technik ist es nun üblich, die Reinigung der Polymerschmelze in mehreren Prozessschritten durchzuführen. Um die Polymerschmelze von flüchtigen Fremdstoffen zu befreien, ist es üblich, die Polymerschmelze zu entgasen. Dabei wird die Schmelzeoberfläche der Polymerschmelze mit einem Vakuum in Kontakt gebracht, so dass sich die flüchtigen Bestandteile aus der Schmelze lösen können. Dieser Vorgang wird bevorzugt unmittelbar beim Extrudieren der Polymerschmelze durch Extruder ausgeführt, wie beispielsweise in der EP 1 400 337 B1 offenbart ist. Hierbei wird an einem Schneckenabschnitt eines Schneckenextruders eine Entgasungszone ausgebildet, die ein Vakuum im Extruderabschnitt erzeugt.

Zum Entfernen der festen Fremdstoffe wird die Polymerschmelze mit Hilfe von Filterelementen filtriert. Dieser Prozessschritt wird üblicherweise mit Hilfe von Filtervorrichtungen ausgeführt, wie beispielsweise aus der DE 199 12 433 A1 bekannt ist. Dabei wird die Polymerschmelze durch ein Filterelement geführt, das in Abhängigkeit von einer Filterfeinheit die festen Fremdstoffe aus dem Schmelzestrom der Polymerschmelze herausfiltert.

Im Stand der Technik sind viele Varianten derartiger Verfahren und Vorrichtungen zum Entgasen der Polymerschmelze und viele Varianten derartiger Verfahren und Vorrichtungen zur Filtrierung der Polymerschmelze bekannt. Hierbei sind mehr oder weniger aufwändige oder zusätzliche Apparaturen erforderlich, um die Reinigung der Polymerschmelze in mehreren Prozessschritten zu ermöglichen. Hierbei sind entsprechend lange Verweilzeiten erforderlich, die die Gefahr der Bildung von Zersetzungsstoffen begünstigen.

Aus dem Stand der Technik sind verschiedene Möglichkeiten der Reinigung bekannt. So sind aus der DD 231 029 A1 ein Verfahren und eine Einrichtung zum Compoundieren von Thermoplasten mit Filter und Entgasung bekannt. Weitere Beispiele sind die EP 0 705 677 A1, die WO 2005/087477 A1, die CN 107 053 635 A, die EP 2 439 044 A1, die EP 2 008 784 A1 und die AT 511 574 A1.

Es ist nun Aufgabe der Erfindung, ein Verfahren und eine Vorrichtung zum Reinigen einer Polymerschmelze zu schaffen, mit welchem bzw. mit welcher die Polymerschmelze mit möglichst kurzen Verweilzeiten gereinigt werden kann.

Ein weiteres Ziel der Erfindung liegt darin, die Reinigung der Polymerschmelze mit geringem apparativen Aufwand ausführen zu können.

Die Aufgabe wird erfindungsgemäß durch ein Verfahren mit den Merkmalen nach Anspruch 1 und durch eine Vorrichtung mit den Merkmalen nach Anspruch 9 gelöst.

Vorteilhafte Weiterbildungen der Erfindung sind durch die Merkmale und Merkmalskombinationen der jeweiligen Unteransprüche definiert.

Die Erfindung wendet sich ab von der klassischen Aufteilung und Reihenfolge einer Entgasung und einer Filtrierung zum Reinigen der Polymerschmelze. So wurde festgestellt, dass der Erfolg einer Entgasung nicht davon abhängig ist, ob Fremdstoffpartikel in der Polymerschmelze enthalten sind. Im Gegenteil begünstigt die Homogenität der Polymerschmelze das Austreten der flüchtigen Fremdstoffe. So wird die Polymerschmelze durch ein Filterelement in ein Vakuum einer Vakuumkammer gedrückt. Die festen Fremdstoffe werden vom Filterelement aufgenommen und die flüchtigen Fremdstoffe in der Vakuumkammer gesammelt. So lassen sich beide Prozessschritte zum Reinigen der Polymerschmelze zu einem Prozessschritt vereinen.

Die erfindungsgemäße Vorrichtung weist hierzu nur ein Filterelement und ein Vakuum einer Vakuumkammer auf. Damit lässt sich die Reinigung einer Polymerschmelze mit geringen apparativem Aufwand in einem Prozessschritt ausführen. Die Polymerschmelze wird durch das Filterelement in die Vakuumkammer der Vakuumkammer gedrückt.

Um eine Entgasung mit größtmöglicher Wirkung ausführen zu können, ist die Verfahrensvariante besonders vorteilhaft, bei welcher die Polymerschmelze innerhalb der Vakuumkammer an einer Austrittsfläche des Filterelementes geführt wird. Damit lassen sich in Abhängigkeit von der Formgebung des Filterelementes relativ große Schmelzeoberflächen innerhalb der Vakuumkammer realisieren, die das Austreten der flüchtigen Fremdstoffe begünstigen. Zudem wird über den Durchfluss an dem Filterelement die Schmelzeoberfläche an der Austrittsfläche des Filterelementes ständig erneuert.

Die aus der Polymerschmelze austretenden flüchtigen Fremdstoffe werden kontinuierlich durch eine Entgasungsöffnung aus der Vakuumkammer abgeführt. Somit ist eine Stofftrennung gewährleistet und die flüchtigen Fremdstoffe können gesondert aufbereitet und ggf. genutzt werden.

Um das Austreten der flüchtigen Fremdstoffe aus der Polymerschmelze innerhalb der Vakuumkammer zu ermöglichen, ist das Vakuum auf einen Unterdruck im Bereich von 0,5 mbar bis 50 mbar eingestellt. Der Unterdruck innerhalb der Vakuumkammer wird dabei in Abhängigkeit von einer Dicke der Polymerschmelze an der Austrittsfläche des Filterelementes gewählt. So wird ein relativ hohes Vakuum erzeugt, um bei relativ dicken Schmelzeschichten eine intensive Entgasung zu erhalten.

Die gereinigte Polymerschmelze wird gemäß einer vorteilhaften Weiterbildung der Erfindung in einem unterhalb des Filterelementes ausgebildeten Sumpf der Vakuumkammer gesammelt und durch einen Schmelzeauslass abgeführt. Es ist ein kontinuierlicher Schmelzefluss realisierbar, so dass die Reinigung der Polymerschmelze ohne Probleme in einem Extrusionsprozess integrierbar ist.

Die Zufuhr der Polymerschmelze erfolgt über einen Schmelzeeinlass in einen durch das Filterelement begrenzten Druckraum mit einem Überdruck. Damit lässt sich in Abhängigkeit von dem Überdruck der Schmelzedurchsatz an dem Filterelement einstellen.

In Abhängigkeit von der Verunreinigung durch feste Fremdstoffe wird die Polymerschmelze mit einer Filterfeinheit des Filterelementes im Bereich von 40 µm bis 1.000 µm gefiltert. So ist beispielsweise bei der Herstellung von feinen Filamenten in einem Schmelzspinnprozess eine relativ hohe Filterfeinheit erforderlich, um Filamentbrüche zu vermeiden.

Je nach Feinheit des Filterelementes wird die Polymerschmelze mit dem Überdruck im Bereich von 10 bar bis 100 bar in den Druckraum eingeleitet.

Um eine ausreichende Fließfähigkeit der Polymerschmelze zu erhalten, wird je nach Polymertyp die Polymerschmelze vor dem Reinigen auf eine Temperatur erhitzt. Vorzugsweise wird die Polymerschmelze auf einer Temperatur von oberhalb 200°C erhitzt.

Damit nach der Filtrierung eine ausreichende Schmelzeoberfläche innerhalb der Vakuumkammer gebildet werden kann, ist bei der erfindungsgemäßen Vorrichtung vorgesehen, dass das Filterelement zumindest aus einer hohlzylindrischen Filterkerze gebildet ist, die in die Vakuumkammer hineinragt. Hierbei werden die Außenseiten der Filterkerze genutzt, um eine möglichst große Außenfläche zur Führung der Schmelze nach der Filtrierung zu erhalten. So werden die Filterelemente mit einer Filterfläche auf der Eintrittsseite ausgeführt, die kleiner ist als eine Austrittsfläche, an welcher die Schmelze zum Zwecke der Entgasung geführt ist.

Zum Erzeugen des Vakuums und zur Abfuhr der flüchtigen Bestandteile ist die Weiterbildung der erfindungsgemäßen Vorrichtung vorgesehen, bei welcher die Vakuumkammer über eine Entgasungsöffnung mit einem Sammelbehälter und einer Vakuumpumpe verbunden ist.

Die Vakuumpumpe ist dabei derart ausgelegt, dass das Vakuum in der Vakuumkammer auf einen Unterdruck im Bereich von 0,5 mbar bis 50 mbar erzeugbar ist.

Die gereinigte Schmelze wird bevorzugt in einem Bodenbereich der Vakuumkammer gesammelt. Hierzu ist gemäß einer vorteilhaften Weiterbildung der Erfindung ein Sumpf ausgebildet, der sich unterhalb des Filterelementes erstreckt und der mit einem Schmelzeauslass in einem Kammergehäuse verbunden ist.

Das Kammergehäuse weist zudem einen Schmelzeeinlass auf, der in einem durch das Filterelement begrenzten Druckraum mündet. So kann ein Schmelzestrom der Polymerschmelze direkt in den Druckraum eingeleitet und zu dem Filterelement geführt werden.

In Abhängigkeit von dem gewünschten Reinheitsgrad der Polymerschmelze weist das Filterelement eine Filterfeinheit im Bereich von 40 µm bis 1.000 µm auf. Die Filterfeinheit ist abhängig vom Herstellungsprozess bzw. von dem jeweils herzustellenden Produkt.

Zur Aufnahme der Polymerschmelze lässt sich der Schmelzeinlass vorteilhat direkt mit einer Druckquelle verbinden, durch welche die Polymerschmelze mit dem Überdruck im Bereich von 10 bar bis 100 bar in den Druckraum einleitbar ist. Als Druckquelle kann ein Extruder oder eine Pumpe genutzt werden.

Zur Temperierung der Polymerschmelze ist eine Heizeinrichtung dem Kammergehäuse zugeordnet. Die Polymerschmelze lässt sich so auf eine vorbestimmte Temperatur vor und nach dem Reinigen halten.

Das erfindungsgemäße Verfahren und die erfindungsgemäße Vorrichtung sind für alle Extrusionsprozesse geeignet, in welchem eine Polymerschmelze verarbeitet wird. Insbesondere können hierbei jedoch auch Polymerschmelzen aus einem Recycleprozess gereinigt werden.

Das erfindungsgemäße Verfahren zum Reinigen einer Polymerschmelze wird nachfolgend anhand einiger Ausführungsbeispiele unter Bezug zu den beigefügten Figuren näher beschrieben.

Es stellen dar:
- Fig. 1: schematisch eine Querschnittsansicht eines ersten Ausführungsbeispiels der erfindungsgemäßen Vorrichtung zum Reinigen einer Polymerschmelze
- Fig. 2: schematisch eine Querschnittsansicht eines weiteren Ausführungsbeispiels der erfindungsgemäßen Vorrichtung zum Reinigen einer Polymerschmelze
- Fig. 3: schematisch ein weiteres, nicht erfindungsgemäßes Ausführungsbeispiel einer Vorrichtung zum Reinigen einer Polymerschmelze
- Fig. 4: schematisch ein weiteres nicht erfindungsgemäßes Ausführungsbeispiel einer Vorrichtung zum Reinigen einer Polymerschmelze

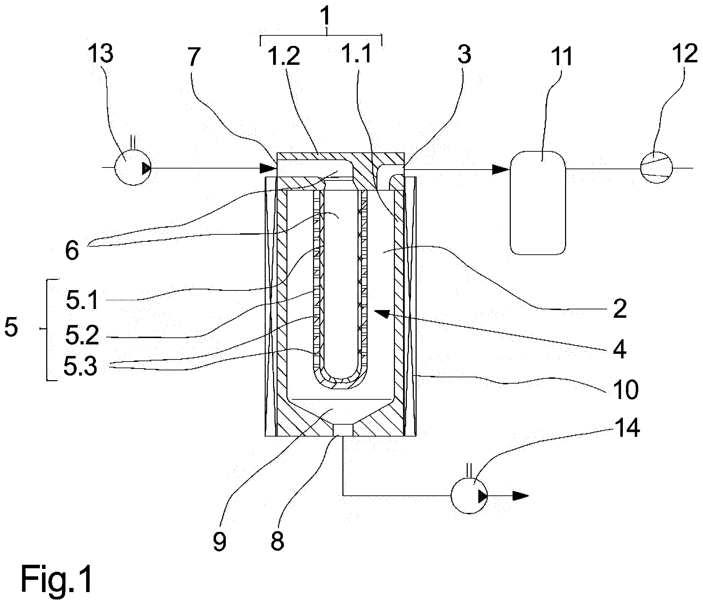

In der Fig. 1 ist ein erstes Ausführungsbeispiel der erfindungsgemäßen Vorrichtung zum Reinigen einer Polymerschmelze schematisch in einer Querschnittsansicht dargestellt. Das Ausführungsbeispiel weist ein Kammergehäuse 1 auf, das in diesem Beispiel durch einen zylindrischen Topf 1.1 und einen Deckel 1.2 gebildet ist. Der Topf 1.1 enthält eine Vakuumkammer 2. Innerhalb der Vakuumkammer 2 ist mittig ein Filterelement 4 an dem Topf 1.1 gehalten. Das Filterelement 4 ist als eine Filterkerze 5 ausgeführt und ragt in die Vakuumkammer 2 hinein. Die Filterkerze 5 ist hohlzylindrisch ausgeführt und weist im Inneren einen Druckraum 6 auf, der mit einem Schmelzeeinlass 7 im Kammergehäuse 1 verbunden ist. Der Schmelzeeinlass 7 ist hier an dem Deckel 1.2 ausgebildet. Die Filterkerze 5 ist an einem freien Ende verschlossen und weist innenliegend ein Filtermaterial 5.1 und am Außenumfang eine Stützwand 5.2 auf. Die Stützwand 5.2 weist eine Vielzahl von Austrittsöffnungen 5.3 auf und bildet eine äußere Austrittsfläche zur Führung der filtrierten Polymerschmelze innerhalb der Vakuumkammer 2.

Unterhalb des Filterelementes 4 ist in der Vakuumkammer 2 ein Sumpf 9 im Boden des Topfes 1.1 ausgebildet. Der Sumpf 9 ist mit einem Schmelzeauslass 8 in dem Kammergehäuse 1 verbunden. Der Schmelzeauslass 8 ist mittig im Boden des Topfes 1.1 angeordnet, wobei der Sumpf 9 sich trichterförmig oberhalb des Schmelzeauslasses 8 erstreckt.

Die Vakuumkammer 2 ist über eine Entgasungsöffnung 3 im Kammergehäuse 1 mit einem Sammelbehälter 11 und einer Vakuumpumpe 12 verbunden. Die Entgasungsöffnung 3 ist in diesem Ausführungsbeispiel in dem Topf 1.1 des Kammergehäuses 1 ausgebildet.

Am Umfang des Kammergehäuses 1 ist eine Heizeinrichtung 10 angeordnet. Die Heizeinrichtung 10 weist vorzugsweise elektrische Heizmittel auf, die hier nicht dargestellt sind.

Im Betrieb ist der Schmelzeeinlass 7 am Kammergehäuse 1 mit einer Druckquelle 13 verbunden. Die Druckquelle 13 ist in diesem Ausführungsbeispiel durch eine Pumpe gebildet. Durch die Pumpe 13 lässt sich die Polymerschmelze kontinuierlich als Schmelzestrom dem Schmelzeeinlass 7 zuführen.

An dem Schmelzeauslass 8 ist eine Austragspumpe 14 angeschlossen. Die Austragspumpe 14 führt die gereinigte Polymerschmelze mit einem kontinuierlichen Ablassstrom ab.

Im Betrieb wird zunächst über die Vakuumpumpe 12 in der Vakuumkammer 2 ein Vakuum mit einem Unterdruck im Bereich von 0,5 mbar bis 50 mbar eingestellt. Die Höhe des Vakuums in der Vakuumkammer 2 ist vom Prozess und von den jeweils verwendeten Filterelementen 4 abhängig.

Über die Druckquelle 13 wird eine Polymerschmelze über den Schmelzeeinlass 7 dem Filterelement 4 zugeführt. Die Polymerschmelze wird hierbei mit einem Überdruck im Bereich von 10 bar bis 100 bar zugeführt. Dabei füllt sich der Druckraum 6 innerhalb der Filterkerze 5, so dass die Polymerschmelze zur Filtrierung durch das Filtermaterial 5.1 gedrückt wird. Die festen Fremdstoffe werden von dem Filtermaterial 5.1 in Abhängigkeit von der Filterfeinheit aufgenommen. Anschließend durchdringt die Polymerschmelze die Austrittsöffnungen 5.3 in der Stützwand 5.2. An der Austrittsfläche der Stützwand 5.2 der Filterkerze 5 bleibt die Polymerschmelze haften und gleitet aufgrund einer Schwerkraft innerhalb der Vakuumkammer in Richtung des Sumpfes 9. Die an der Austrittsfläche der Stützwand 5.2 geführte Polymerschmelze bildet innerhalb der Vakuumkammer 2 eine mantelförmige Schmelzeoberfläche, die unmittelbar dem Vakuum ausgesetzt ist. Dabei werden die flüchtigen Fremdstoffe aus der Polymerschmelze herausgeführt und innerhalb der Vakuumkammer 2 gesammelt. Über die Entgasungsöffnung 3 werden die flüchtigen Fremdstoffe abgeführt und in den Sammelbehälter 11 aufgenommen. Innerhalb des Sammelbehälters 11 lassen sich die flüchtigen Fremdstoffe aufbereiten und beispielsweise in gasförmige und flüssige Medien trennen.

Die sich im Sumpf 9 ansammelnde gereinigte Polymerschmelze wird über den Schmelzeauslass 8 abgeführt. Zum Erzeugen eines kontinuierlichen Schmelzestromes ist die Austragspumpe 14 an dem Schmelzeauslass 8 angeschlossen, so dass ein kontinuierlicher Schmelzestrom erzeugbar ist. Hierbei besteht die Möglichkeit, dass innerhalb der Vakuumkammer 2 ein Füllstandssensor angeordnet ist, der mit einer Pumpensteuerung derart zusammenwirkt, dass ein im wesentlicher konstanter Schmelzedurchlauf gewährleistet ist. Hierbei kann die Pumpensteuerung auf die Druckquelle oder die Austragspumpe oder auf beide einwirken.

Zur Temperierung ist die Heizeinrichtung 10 am Umfang des Kammergehäuses 1 vorgesehen. Die Heizeinrichtung 10, die vorzugsweise elektrische Heizmittel aufweist, gewährleistet eine Schmelzetemperatur von oberhalb 200°C. Hierbei können Temperaturen bis zu 330°C erforderlich sein, um die Polymerschmelze temperiert zu halten. Diese richten sich im Wesentlichen nach dem Polymertyp der zu reinigenden Polymerschmelze.

Das erfindungsgemäße Verfahren und die erfindungsgemäße Vorrichtung sind grundsätzlich für alle thermoplastischen Schmelzen geeignet. Durch die kombinierte Filtrierung und Entgasung ist die Reinigung der Polymerschmelze mit relativ kurzen Verweilzeiten durchführbar.

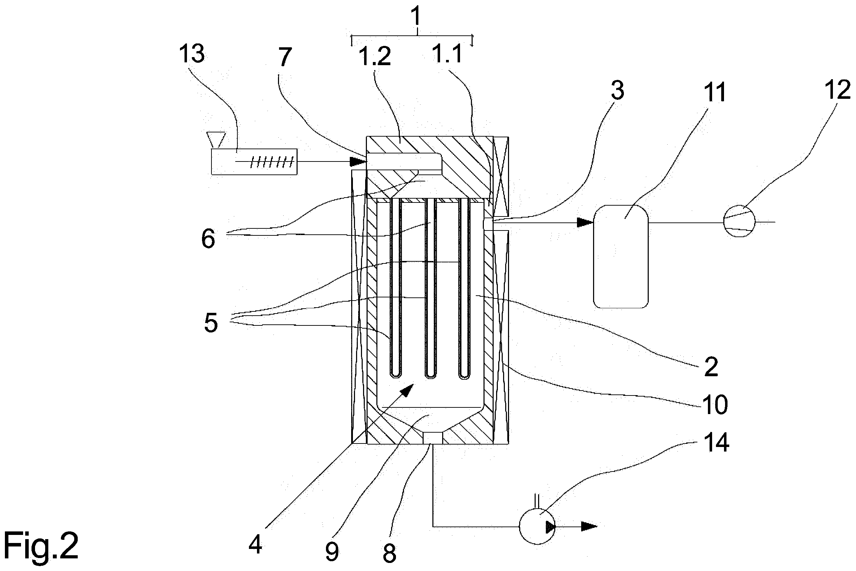

Um einen höheren Schmelzedurchsatz, wie beispielsweise von Extrudern erzeugbar ist, zu ermöglichen, ist in Fig. 2 ein weiteres Ausführungsbeispiel der erfindungsgemäßen Vorrichtung schematisch in einer Querschnittsansicht dargestellt. Das Ausführungsbeispiel ist im Wesentlichen identisch zu dem vorgenannten Ausführungsbeispiel nach Fig. 1, so dass an dieser Stelle nur die Unterschiede erläutert werden und ansonsten Bezug zu der vorgenannten Beschreibung genommen wird.

Bei dem Ausführungsbeispiel nach Fig. 2 sind mehrere Filterelemente 4 vorgesehen, die auskragend in eine Vakuumkammer 2 hineinragen. In diesem Ausführungsbeispiel sind drei Filterkerzen 5 parallel nebeneinander angeordnet und mit dem Schmelzeeinlass 7 und dem Druckraum 6 verbunden. Die Anzahl der Filterelemente 4 ist beispielhaft. Grundsätzlich kann eine hohe Anzahl von Filterelementen im Bereich von 100 bis 150 Stück genutzt werden, um eine kombinierte Filtrierung und Entgasung zum Reinigen der Polymerschmelze durchzuführen.

Bei dem Ausführungsbeispiel nach Fig. 2 ist jede Filterkerze 5 identisch aufgebaut und gemäß dem Ausführungsbeispiel nach Fig. 1 ausgeführt. Insoweit wird zu der vorgenannten Beschreibung diesbezüglich Bezug genommen.

Die Entgasungsöffnung 3 ist in diesem Ausführungsbeispiel im oberen Bereich der Vakuumkammer 2 in dem Topf 1.1 des Kammergehäuses 1 ausgebildet. An der Entgasungsöffnung 2 sind ein Sammelbehälter 11 und eine Vakuumpumpe 12 angeschlossen.

Unterhalb der freien Enden der Filterelemente 4 ist ein Sumpf 9 in der Vakuumkammer 2 ausgebildet. Der Sumpf 9 ist mit einem Schmelzeauslass 8 verbunden.

Bei dem in Fig. 2 dargestellten Ausführungsbeispiel ist eine Druckquelle 13 in Form eines Extruders vorgesehen. Insoweit wird eine Auslassseite des Extruders direkt mit dem Schmelzeeinlass 7 der Reinigungseinrichtung verbunden.

Die Funktion des in Fig. 2 dargestellten Ausführungsbeispiels ist identisch zu dem Ausführungsbeispiel nach Fig. 1, so dass an dieser Stelle hierzu keine weitere Erläuterung erfolgt.

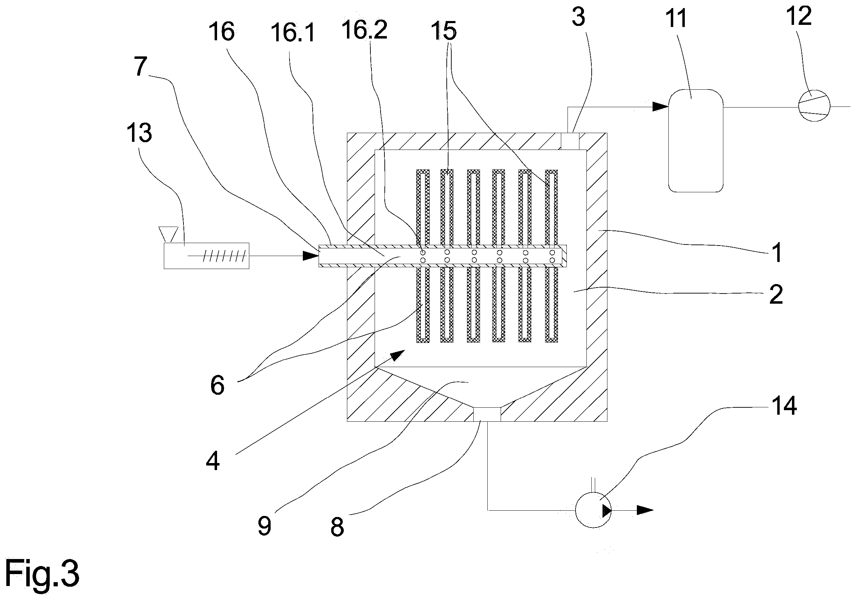

Bei der Ausbildung der Filterelemente 4 sind die durch die Filterelemente bereitgehaltenen Austrittsflächen stets größer ausgeführt, als eine Filterfläche zur Filtrierung der Polymerschmelze. So wird die Polymerschmelze an den Filterkerzen 5 von innen nach außen gedrückt, wobei die Austrittsfläche am Umfang der Filterkerzen 5 die Schmelzenoberflächen zur Entgasung erzeugen. Grundsätzlich sind auch andere Filterelemente als Filterkerzen geeignet, um eine kombinierte Filtrierung und Entgasung ausführen zu können. In Fig. 3 ist hierzu ein weiteres, nicht zur beanspruchten Erfindung gehörendes Ausführungsbeispiel gezeigt, bei welchem die Filterelemente durch Filterscheiben gebildet sind.

In Fig. 3 ist schematisch ein Ausführungsbeispiel einer nicht erfindungsgemäßen Vorrichtung in einer Querschnittsansicht dargestellt. Das in Fig. 3 gezeigte Ausführungsbeispiel weist ein Kammergehäuse 1 auf, in welchem eine Vakuumkammer 2 ausgebildet ist. Die Vakuumkammer 2 ist über eine Entgasungsöffnung 3 mit einem Sammelbehälter 11 und einer Vakuumpumpe 12 verbunden.

Innerhalb der Vakuumkammer 2 ist eine Mehrzahl von Filterelementen 4 angeordnet. Die Filterelemente 4 werden in diesem Ausführungsbeispiel durch Filterscheiben 15 gebildet, die am Umfang eines Dorns 16 gehalten sind. Der Dorn 16 bildet im Innern einen Schmelzekanal 16.1, der über mehrere Verteilöffnungen 16.2 mit jeweils einem Druckraum 6 der Filterscheiben 15 verbunden ist. Der Dorn 16 durchdringt das Kammergehäuse 1 nach außen hin und bildet an einem offenen Ende einen Schmelzeeinlass 7.

Innerhalb der Vakuumkammer 2 ist unterhalb der vertikal ausgerichteten Filterscheiben ein Sumpf 9 ausgebildet. Der Sumpf 9 ist trichterförmig ausgebildet und mit einem unteren Schmelzeauslass 8 im Kammergehäuse 1 verbunden. Der Schmelzeauslass 8 und die Entgasungsöffnung 3 liegen sich in diesem Ausführungsbeispiel in der Vakuumkammer 2 gegenüber.

Im Betrieb lässt sich der Schmelzeeinlass 7 direkt mit einem Extruder als Druckquelle 13 verbinden. Insoweit wird die Polymerschmelze über den Schmelzekanal 16.1 und die Verteilöffnung 16.2 in die Druckräume 6 der Filterscheiben 15 geführt. Die Filterscheiben 15 weisen ein Filtermaterial auf, um die festen Fremdstoffe aus der Polymerschmelze zu filtrieren. Hierbei kann das Filtermaterial eine Filterfeinheit im Bereich von 40 µm bis 1.000 µm aufweisen. Nach Durchtritt der Polymerschmelze durch das Filtermaterial an der Filterscheibe 15 gelangt die Polymerschmelze an die Austrittsflächen der Filterscheiben 15, wobei sich innerhalb der Vakuumkammer an jeder der Filterscheiben 15 eine Schmelzeoberfläche der Polymerschmelze ausbildet. Die Polymerschmelze gelangt dann aufgrund ihrer Schwerkraft zu dem Sumpf 9 im Boden der Vakuumkammer 2. In dieser Zeit wird die Entgasung der Polymerschmelze durchgeführt. Die dabei austretenden flüchtigen Fremdstoffe werden über die Entgasungsöffnung 3 dem Sammelbehälter 11 zugeführt. Das durch die Vakuumpumpe 12 eingestellte Vakuum liegt in einem Bereich von 0,5 mbar bis 50 mbar. Die gereinigte Polymerschmelze wird über den Schmelzeauslass durch die Austragspumpe 14 in einem kontinuierlichen Schmelzestrom aus der Vakuumkammer 2 gefördert. Bei höheren Durchflussraten könnte die Polymerschmelze alternativ auch durch einen Austragsextruder gefördert werden.

Bei dem in Fig. 3 dargestellten Ausführungsbeispiel wurde die Heizeinrichtung 10 zur Temperierung des Kammergehäuses 1 nicht näher dargestellt. Ebenso ist die dargestellte Anzahl der Filterscheiben beispielhaft. Grundsätzlich kann auch eine höhere Anzahl von Filterscheiben zur kombinierten Filtrierung und Entgasung der Polymerschmelze genutzt werden.

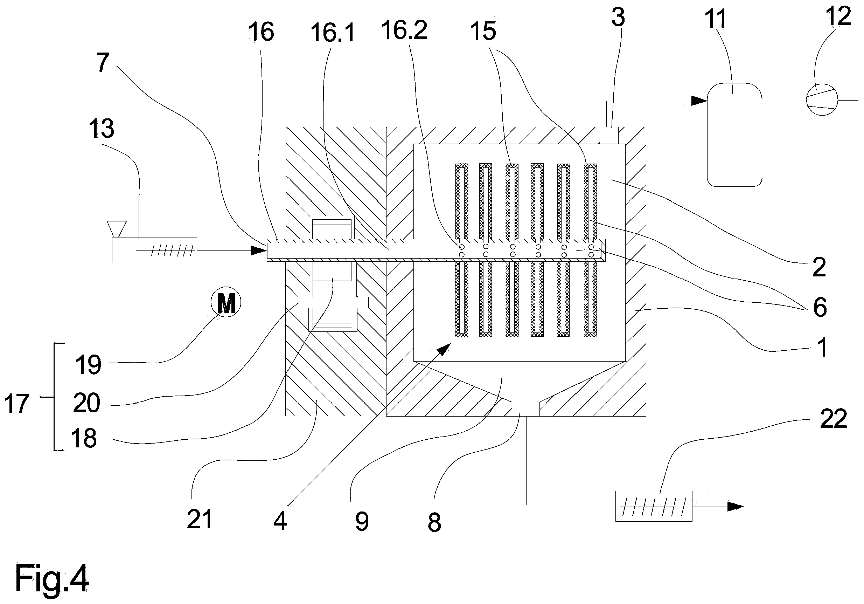

Um die Schmelzeoberflächenbildung zu verbessern, ist in Fig. 4 ein alternatives Ausführungsbeispiel der erfindungsgemäßen Vorrichtung dargestellt. Das Ausführungsbeispiel nach Fig. 4 ist im Wesentlichen identisch zu dem Ausführungsbeispiel nach Fig. 3, so dass nachfolgend nur die Unterschiede erläutert und ansonsten Bezug zu der vorgenannten Beschreibung zu der Fig. 3 genommen wird.

Bei dem in Fig. 4 dargestellten Ausführungsbeispiel ist neben dem Kammergehäuse 1 ein Antriebsgehäuse 21 angeordnet. Das Antriebsgehäuse 21 wird von dem Dorn 16 durchdrungen, wobei der Dorn 16 an einem geschlossenen Ende mehrere Filterscheiben 15 innerhalb einer Vakuumkammer 2 hält und wobei ein freies Ende des Dornes 16 ausserhalb des Antriebsgehäuses 21 einen Schmelzeeinlass 7 bildet. Innerhalb des Antriebsgehäuses 21 ist der Dorn 16 drehbar gelagert und über eine Zahnradpaarung 18 mit einer Antriebswelle 20 gekoppelt. Die Antriebswelle 20 ist mit einem Motor 19 verbunden. Über den Motor 19 lässt sich somit der Dorn 16 in eine Drehbewegung versetzen, so dass die innerhalb der Vakuumkammer 2 gehaltenen Filterscheiben 15 mit einer vorbestimmten Umfangsgeschwindigkeit rotieren. Somit wird eine an den Austrittsflächen der Filterscheiben 15 bildende Schmelzeschicht bewegt, was eine Erneuerung der Schmelzeoberfläche begünstigt.

Bei dem Ausführungsbeispiel nach Fig. 4 ist an dem Schmelzeauslass 8 des Kammergehäuses 1 ein Austragsextruder 22 angeschlossen. Der Austragsextruder 22 ist in einer waagerechten Anordnung gezeigt, um die gereinigte Polymerschmelze kontinuierlich zu fördern. Grundsätzlich könnte der Austragsextruder 22 auch in einer senkrechten Anordnung gehalten werden, um einen kontinuierlichen Schmelzestrom der gereinigten Polymerschmelze zu erzeugen.

Die Funktion zum Reinigen der Polymerschmelze durch eine kombinierte Filtrierung und Entgasung ist bei dem Ausführungsbeispiel nach Fig. 4 identisch zu dem Ausführungsbeispiel nach Fig. 3. Insoweit wird zu der vorgenannten Beschreibung zu der Fig. 3 Bezug genommen.

Bei den in Fig. 1 bis 4 dargestellten Ausführungsbeispielen der erfindungsgemäßen Vorrichtung zur Reinigung der Polymerschmelze sind die Anordnung und die Wahl der Filterelemente beispielhaft. So können die dargestellten Filterkerzen nach den Fig. 1 und 2 auch in geänderter Einbaulage in der Vakuumkammer gehalten werden. So sind vertikale, horizontale oder winkelige Einbaulagen möglich. Darüber hinaus sind die Filterelemente vorzugsweise austauschbar ausgeführt, um die festen Fremdstoffe aus den Filterelementen zu entfernen.

Ebenso lassen sich als Druckmittel wahlweise Extruder oder Pumpen sowie auslassseitig Austragspumpen und Austragsextruder bei den dargestellten Ausführungsbeispielen nach Fig. 1 bis Fig. 4 beliebig miteinander kombinieren.

## Patentansprüche

1. Verfahren zum Reinigen einer Polymerschmelze, bei welchem flüchtige Fremdstoffe und feste Fremdstoffe aus der Polymerschmelze entfernt werden, wobei die Polymerschmelze durch ein Filterelement in ein Vakuum einer Vakuumkammer gedrückt wird, wobei die festen Fremdstoffe vom Filterelement aufgenommen werden und wobei die flüchtigen Fremdstoffe in der Vakuumkammer gesammelt werden, und wobei die Polymerschmelze innerhalb der Vakuumkammer an einer Austrittsfläche des Filterelementes geführt wird, **dadurch gekennzeichnet, dass** das Filterelement zumindest aus einer hohlzylindrischen Filterkerze gebildet ist, die in die Vakuumkammer hineinragt.

2. Verfahren nach Anspruch 1, **dadurch gekennzeichnet, dass** die flüchtige Fremdstoffe durch eine Entgasungsöffnung aus der Vakuumkammer abgeführt werden.

3. Verfahren nach einem der Ansprüche 1 oder 2, **dadurch gekennzeichnet, dass** das Vakuum in der Vakuumkammer auf einen Unterdruck im Bereich von 0,5 mbar bis 50 mbar eingestellt wird.

4. Verfahren nach einem der Anspruch 1 bis 3, **dadurch gekennzeichnet, dass** die Polymerschmelze in einem unterhalb des Filterelementes ausgebildeten Sumpf der Vakuumkammer gesammelt und durch einen Schmelzeauslass abgeführt wird.

5. Verfahren nach einem der Ansprüche 1 bis 4, **dadurch gekennzeichnet, dass** die Polymerschmelze über einen Schmelzeeinlass in einen durch das Filterelement begrenzten Druckraum mit einem Überdruck eingeleitet wird.

6. Verfahren nach Anspruch 5, **dadurch gekennzeichnet, dass** die Polymerschmelze mit einer Filterfeinheit des Filterelementes im Bereich von 40 µm bis 1000 µm gefiltert wird.

7. Verfahren nach Anspruch 6, **dadurch gekennzeichnet, dass** die Polymerschmelze mit dem Überdruck im Bereich von 10 bar bis 100 bar in den Druckraum eingeleitet wird.

8. Verfahren nach einem der Ansprüche 1 bis 7, **dadurch gekennzeichnet, dass** die Polymerschmelze vor dem Reinigen auf eine Temperatur oberhalb 200°C erhitzt wird.

9. Vorrichtung zum Reinigen einer Polymerschmelze, mit welcher flüchtige Fremdstoffe und feste Fremdstoffe aus der Polymerschmelze entfernbar sind, umfassend ein Filterelement (4) und ein Vakuum einer Vakuumkammer (2), wobei die Polymerschmelze durch das Filterelement in das Vakuum der Vakuumkammer (2) führbar ist, wobei das Filterelement (4) die festen Fremdstoffe bindet und wobei die Vakuumkammer (2) die flüchtigen Fremdstoffe aufnimmt, **dadurch gekennzeichnet, dass** das Filterelement (4) zumindest aus einer hohlzylindrischen Filterkerze (5) gebildet ist, die in die Vakuumkammer (2) hineinragt.

10. Vorrichtung nach Anspruch 9, **dadurch gekennzeichnet, dass** die Vakuumkammer (2) über eine Entgasungsöffnung (3) mit einem Sammelbehälter (11) und einer Vakuumpumpe (12) verbunden ist.

11. Vorrichtung nach Anspruch 10, **dadurch gekennzeichnet, dass** das Vakuum in der Vakuumkammer (2) durch die Vakuumpumpe (12) auf einen Unterdruck im Bereich von 0,5 mbar bis 50 mbar erzeugbar ist.

12. Vorrichtung nach einem der Ansprüche 8 bis 11, **dadurch gekennzeichnet, dass** in einem Bodenbereich der Vakuumkammer (2) einen Sumpf (9) unterhalb des Filterelementes (4) ausgebildet ist, der mit einem Schmelzeauslass (8) in einem Kammergehäuse (1) verbunden ist.

13. Vorrichtung nach Anspruch 12, **dadurch gekennzeichnet, dass** das Kammergehäuse (1) einen Schmelzeeinlass (7) aufweist, der in einen durch das Filterelement (4) begrenzten Druckraum (6) mündet.

14. Vorrichtung nach einem der Ansprüche 9 bis 13, **dadurch gekennzeichnet, dass** das Filterelement (4) eine Filterfeinheit im Bereich von 40 µm bis 1000 µm aufweist.

15. Vorrichtung nach Anspruch 13 oder 14, **dadurch gekennzeichnet, dass** der Schmelzeinlass (7) mit einer Druckquelle (13) verbindbar ist, durch welche die Polymerschmelze mit dem Überdruck im Bereich von 10 bar bis 100 bar in den Druckraum (6) einleitbar ist.

16. Vorrichtung nach einem der Ansprüche 9 bis 15, **dadurch gekennzeichnet, dass** eine Heizeinrichtung (10) zum Temperieren des Kammergehäuses (1) vorgesehen ist.

## Claims

1. Method for cleaning a polymer melt, in which volatile foreign substances and solid foreign substances are removed from the polymer melt, wherein the polymer melt is pressed through a filter element into a vacuum of a vacuum chamber, wherein the solid foreign substances are taken up by the filter element and wherein the volatile foreign substances are collected in the vacuum chamber, and wherein the polymer melt is guided within the vacuum chamber on an outlet face of the filter element, **characterized in that** the filter element is formed at least from a hollow-cylindrical filter candle projecting into the vacuum chamber.

2. Method according to Claim 1, **characterized in that** the volatile foreign substances are discharged from the vacuum chamber through a degassing opening.

3. Method according to either of Claims 1 and 2, **characterized in that** the vacuum in the vacuum chamber is adjusted to a negative pressure in the range of 0.5 mbar to 50 mbar.

4. Method according to one of Claims 1 to 3, **characterized in that** the polymer melt is collected in a vacuum chamber sump formed beneath the filter element and is discharged through a melt outlet.

5. Method according to one of Claims 1 to 4, **characterized in that** the polymer melt is introduced, with an excess pressure, via a melt inlet into a pressure space delimited by the filter element.

6. Method according to Claim 5, **characterized in that** the polymer melt is filtered with a filter fineness of the filter element in the range of 40 µm to 1000 µm.

7. Method according to Claim 6, **characterized in that** the polymer melt is introduced into the pressure space with an excess pressure in the range of 10 bar to 100 bar.

8. Method according to one of Claims 1 to 7, **characterized in that** the polymer melt is heated to a temperature above 200°C before it is cleaned.

9. Device for cleaning a polymer melt, with which volatile foreign substances and solid foreign substances can be removed from the polymer melt, comprising a filter element (4) and a vacuum of a vacuum chamber (2), wherein the polymer melt can be guided through the filter element into the vacuum of the vacuum chamber (2), wherein the filter element (4) binds the solid foreign substances and wherein the vacuum chamber (2) receives the volatile foreign substances, **characterized in that** the filter element (4) is formed at least from a hollow-cylindrical filter candle (5) projecting into the vacuum chamber (2).

10. Device according to Claim 9, **characterized in that** the vacuum chamber (2) is connected via a degassing opening (3) to a collecting container (11) and a vacuum pump (12).

11. Device according to Claim 10, **characterized in that** the vacuum in the vacuum chamber (2) can be generated by the vacuum pump (12) at a negative pressure in the range of 0.5 mbar to 50 mbar.

12. Device according to one of Claims 8 to 11, **characterized in that** a sump (9) is formed beneath the filter element (4) in a bottom region of the vacuum chamber (2) and is connected to a melt outlet (8) in a chamber housing (1).

13. Device according to Claim 12, **characterized in that** the chamber housing (1) has a melt inlet (7) which opens into a pressure space (6) delimited by the filterelement (4).

14. Device according to one of Claims 9 to 13, **characterized in that** the filter element (4) has a filter fineness in the range of 40 µm to 1000 µm.

15. Device according to Claim 13 or 14, **characterized in that** the melt inlet (7) can be connected to a pressure source (13) by means of which the polymer melt can be introduced into the pressure space (6) with an excess pressure in the range of 10 bar to 100 bar.

16. Device according to one of Claims 9 to 15, **characterized in that** a heater (10) for controlling the temperature of the chamber housing (1) is provided.

## Revendications

1. Procédé de purification d'une masse fondue de polymère, dans lequel on élimine de la masse fondue de polymère des impuretés volatiles et des impuretés solides, dans lequel la masse fondue de polymère est comprimée par un élément filtrant dans un vide d'une chambre à vide, dans lequel les impuretés solides sont reprises par l'élément filtrant, et dans lequel les impuretés volatiles sont collectées dans la chambre à vide, et dans lequel la masse fondue de polymère est, à l'intérieur de la chambre à vide, envoyée à une surface de sortie de l'élément filtrant, **caractérisé en ce que** l'élément filtrant est formé d'au moins une bougie filtrante cylindrique creuse, qui pénètre dans la chambre à vide.

2. Procédé selon la revendication 1, **caractérisé en ce que** les impuretés volatiles sont évacuées de la chambre à vide par un orifice de dégazage.

3. Procédé selon l'une des revendications 1 ou 2, **caractérisé en ce que** le vide dans la chambre à vide est ajusté à une dépression dans la plage de 0,5 mbar à 50 mbar.

4. Procédé selon l'une des revendications 1 à 3, **caractérisé en ce que** la masse fondue de polymère est collectée dans une fosse de la chambre à vide, réalisée en dessous de l'élément filtrant, et est évacuée par une sortie de masse fondue.

5. Procédé selon l'une des revendications 1 à 4, **caractérisé en ce que** la masse fondue de polymère est introduite en surpression, par une entrée de masse fondue, dans un compartiment sous pression délimité par l'élément filtrant.

6. Procédé selon la revendication 5, **caractérisé en ce que** la masse fondue de polymère est filtrée jusqu'à une finesse de filtration de l'élément filtrant dans la plage de 40 µm à 1 000 µm.

7. Procédé selon la revendication 6, **caractérisé en ce que** la masse fondue de polymère est introduite dans le compartiment sous pression avec une surpression dans la plage de 10 bar à 100 bar.

8. Procédé selon l'une des revendications 1 à 7, **caractérisé en ce que** la masse fondue de polymère est, avant la purification, chauffée à une température supérieure à 200 °C.

9. Dispositif de purification d'une masse fondue de polymère, par lequel des impuretés volatiles et des impuretés solides peuvent être éliminées de la masse fondue de polymère, comprenant un élément filtrant (4) et un vide d'une chambre à vide (2), dans lequel la masse fondue de polymère peut être guidée dans le vide de la chambre à vide (2) en passant dans l'élément filtrant, dans lequel l'élément filtrant (4) lie les impuretés solides, et dans lequel la chambre à vide (2) reprend les impuretés volatiles, **caractérisé en ce que** l'élément filtrant (4) est formé au moins d'une bougie filtrante cylindrique creuse (5), qui pénètre dans la chambre à vide (2).

10. Dispositif selon la revendication 9, **caractérisé en ce que** la chambre à vide (2) est, par un orifice de dégazage (3), reliée à un réservoir (11) et à une pompe à vide (12).

11. Dispositif selon la revendication 10, **caractérisé en ce que** le vide dans la chambre à vide (2) peut être produit par une pompe à vide (12) jusqu'à une dépression dans la plage de 0,5 mbar à 50 mbar.

12. Dispositif selon l'une des revendications 8 à 11, **caractérisé en ce que**, dans une zone de fond de la chambre à vide (2), une fosse (9) est réalisée en dessous de l'élément filtrant (4), qui est reliée à une sortie de masse fondue (8) dans un carter de chambre (1).

13. Dispositif selon la revendication 12, **caractérisé en ce que** le carter de chambre (1) présente une entrée de masse fondue (7), qui débouche dans un compartiment sous pression (6) délimité par l'élément filtrant (4).

14. Dispositif selon l'une des revendications 9 à 13, **caractérisé en ce que** l'élément filtrant (4) présente une finesse de filtration dans la plage de 40 µm à 1 000 µηι.

15. Dispositif selon la revendication 13 ou 14, **caractérisé en ce que** l'entrée de masse fondue (7) peut être reliée à une source de pression (13), par laquelle la masse fondue de polymère peut être introduite dans le compartiment sous pression (6) sous une surpression dans la plage de 10 bar à 100 bar.

16. Dispositif selon l'une des revendications 9 à 15, **caractérisé en ce qu'**un dispositif de chauffage (10) est prévu pour équilibrer la température du carter de chambre (1).
